# EUROPÄISCHE PATENTSCHRIFT

(11) **EP 2 813 318 B1**
(45) Veröffentlichungstag und Bekanntmachung des Hinweises auf die Patenterteilung: **05.08.2015**
(21) Anmeldenummer: 13171946.0
(22) Anmeldetag: 14.06.2013
(51) Int. Cl.: B23Q 1/62, B23Q 11/00

(54) **Werkzeugmaschine mit kompensiertem Werkzeugdurchhang und einstellbarem Werkzeugsturz**
Machine tool with compensated tool sag of and adjustable tool drop
Machine-outil dotée d'une flèche d'outil compensée et d'un linteau d'outil réglable

(43) Veröffentlichungstag der Anmeldung: 17.12.2014
(73) Patentinhaber: Schwäbische Werkzeugmaschinen GmbH, 78713 Schramberg-Waldmössingen (DE)
(72) Erfinder: Armleder Wolfgang, 78628 Rottweil (DE)
(74) Vertreter: Kohler Schmid Möbus Patentanwälte

(56) Entgegenhaltungen:
- EP-A1- 2 149 423
- EP-A1- 2 412 475
- EP-A2- 0 742 072

## Beschreibung

Die Erfindung betrifft eine Werkzeugmaschine mit einer einen X-, Y- und Z-Schlitten umfassenden Schlitteneinheit, deren Z-Schlitten eine ein Bearbeitungswerkzeug aufnehmende horizontale Arbeitsspindel aufweist, wobei der Z-Schlitten am X-Schlitten in einer ersten horizontalen Richtung, der X-Schlitten am Y-Schlitten in einer zweiten horizontalen Richtung und der Y-Schlitten an einer ortsfesten vertikalen Y-Führung in einer vertikalen Richtung verfahrbar geführt ist. (EP-A-0 742 072)

Beim Einsatz solcher horizontaler Werkzeugmaschinen, also bei Werkzeugmaschinen mit horizontalen Arbeitsspindeln, kann sich gravitationsbedingt ein Durchhang des in der Arbeitsspindel aufgenommenen Bearbeitungswerkzeugs einstellen, wodurch die Bearbeitungsgenauigkeit nachteilig beeinflusst wird. Ein solcher Durchhang ist bei langen und bei schweren Bearbeitungswerkzeugen besonders stark ausgeprägt. Der Durchhang kann dazu führen, dass beispielsweise die Spitze eines als Bohrer ausgebildeten Werkzeugs nicht an der zur Bearbeitung des Werkstücks vorgesehenen Stelle, sondern davon abweichend etwas weiter unten ansetzt. Wird jedoch bei der Werkstückbearbeitung eine hohe Fertigungsgenauigkeit gefordert, so kann diese Abweichung bereits dazu führen, dass das Werkstück als Ausschuss einzustufen ist.

Darüber hinaus besteht, insbesondere bei Spezialanfertigungen, der Wunsch nach einer Einstellmöglichkeit eines vorbestimmten Werkzeugsturzes, also einer gezielten von der Horizontalen abweichenden Ausrichtung des Werkzeugs, um beispielsweise Bohrungen unter vorgegebenen Winkeln in das Werkstück einzubringen.

Es ist die Aufgabe der Erfindung, eine Werkzeugmaschine der eingangs genannten Art dahingehend weiterzubilden, dass ein Durchhang des Werkzeugs zumindest teilweise kompensiert und ein gewünschter Werkzeugsturz einstellt werden kann.

Diese Aufgabe wird bei einer Werkzeugmaschine der eingangs genannten Art erfindungsgemäß dadurch gelöst, dass der Y-Schlitten mindestens ein Laufteil, welches in der Y-Führung verfahrbar geführt ist, und mindestens ein Schwenkteil, welches am Laufteil um eine in X-Richtung verlaufende Schwenkachse schwenkbar gelagert ist, umfasst und dass eine Stelleinheit zum Verschwenken des Schwenkteils gegenüber dem Laufteil vorgesehen ist, um einen gravitationsbedingten Werkzeugdurchhang zu kompensieren oder einen vorbestimmten Werkzeugsturz einzustellen.

Erfindungsgemäß kann zur Kompensation eines Werkzeugdurchhangs und zur Einstellung eines Werkzeugsturzes das Schwenkteil also gegenüber dem Laufteil um einen entsprechenden Winkel verschwenkt werden, wodurch bis auf das Laufteil des Y-Schlittens die gesamte Schlitteneinheit samt dem in der Arbeitsspindel aufgenommenen Werkzeug verschwenkt wird. Um den für die Kompensation im Einzelfall erforderlichen Schwenkwinkel zu bestimmen, kann die Werkzeugmaschine eine Messeinrichtung aufweisen, das den zu kompensierenden Durchhang erfasst. Der erfasste Durchhang kann dann, beispielsweise anhand eines in einer Steuereinheit ablaufenden Datenverarbeitungsprogramms, in einen einzustellenden Schwenkwinkel des Schwenkteils umgerechnet werden. Die Steuereinheit steuert dann die Stelleinheit derart an, dass der berechnete Schwenkwinkel eingestellt wird. Im Sinne der Erfindung ist das Schwenkteil auch dann an dem Laufteil schwenkbar gelagert, wenn kein Schwenklager als solches vorgesehen ist und zum Beispiel das Schwenkteil zumindest teilweise elastisch bzw. nachgiebig ausgebildet und direkt an dem Laufteil befestigt bzw. gelagert ist oder wenn das Laufteil und das Schwenkteil einstückig und im Bereich der Schwenkachse zumindest teilweise elastisch bzw. nachgiebig ausgebildet sind.

Bei einer vorteilhaften Ausführungsform ist das Schwenkteil über ein Schwenklager mit dem Laufteil gekoppelt. Durch das Vorsehen eines Schwenklagers als solches kann der Schwenkwinkel zwischen dem Laufteil und dem Schwenkteil vergrößert werden.

Bei einer vorteilhaften Ausführungsform weist die Stelleinheit als Stellglied ein zwischen das Laufteil und das Schwenkteil schiebbares Spreizelement, das beispielsweise keilförmig ausgebildet sein kann. Durch ein solches keilförmiges Spreizelement können vergleichsweise große Spreizkräfte auf das Schwenkteil übertragen werden.

Vorzugsweise ist das Stellglied der Stelleinheit elektrisch, insbesondere piezoelektrisch, hydraulisch oder pneumatisch angetrieben. Bevorzugt handelt es sich bei den Stellgliedern um Stellglieder mit einer Lage- und Geschwindigkeitsrückführung nach der Art von NC-Achsen, die eine Ansteuerung zu Steuer- oder Regelungszwecken erlauben.

Bei einer besonders vorteilhaften Ausführungsform umfasst der Y-Schlitten beidseitig jeweils ein Laufteil, welches in einer Y-Führung in Y-Richtung geführt ist, und ein Schwenkteil, welches an den beiden Laufteilen um die in X-Richtung verlaufende Schwenkachse schwenkbar gelagert ist, umfasst und dass zwischen jedem der beiden Laufteilen und dem Schwenkteil jeweils eine separat ansteuerbare Stelleinheit angeordnet ist, um einen gravitationsbedingten Werkzeugdurchhang zu kompensieren oder einen vorbestimmten Werkzeugsturz einzustellen. Durch die individuelle Ansteuerbarkeit der beiden Stelleinheiten können die beiden Seiten des Schwenkteils winkelsynchron oder winkelasynchron verschwenkt werden, um einen Werkzeugdurchhang zu kompensieren oder eine Sturzverstellung in vertikaler und/oder in horizontaler Richtung zu erreichen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: eine erfindungsgemäße Werkzeugmaschine in einer Seitenansicht;
- Fig. 2: eine Detailansicht einer Stelleinheit der Werkzeugmaschine aus Fig.1;
- Fig. 3: eine Detailansicht eines Schwenklagers aus Fig.1;
- Fig. 4: eine erfindungsgemäße mehrspindlige Werkzeugmaschine in einer Vorderansicht mit zwei spiegelsymmetrisch zur Mitte positionierten X-Schlitten;
- Fig. 5: die mehrspindlige Werkzeugmaschine der Fig. 4 mit zwei asymmetrisch zur Mitte positionierten X-Schlitten; und
- Fig. 6: eine Seitenansicht der mehrspindligen Werkzeugmaschine aus Fig. 4.

In der folgenden Beschreibung der Zeichnung werden für gleiche bzw. funktionsgleiche Bauteile identische Bezugszeichen verwendet.

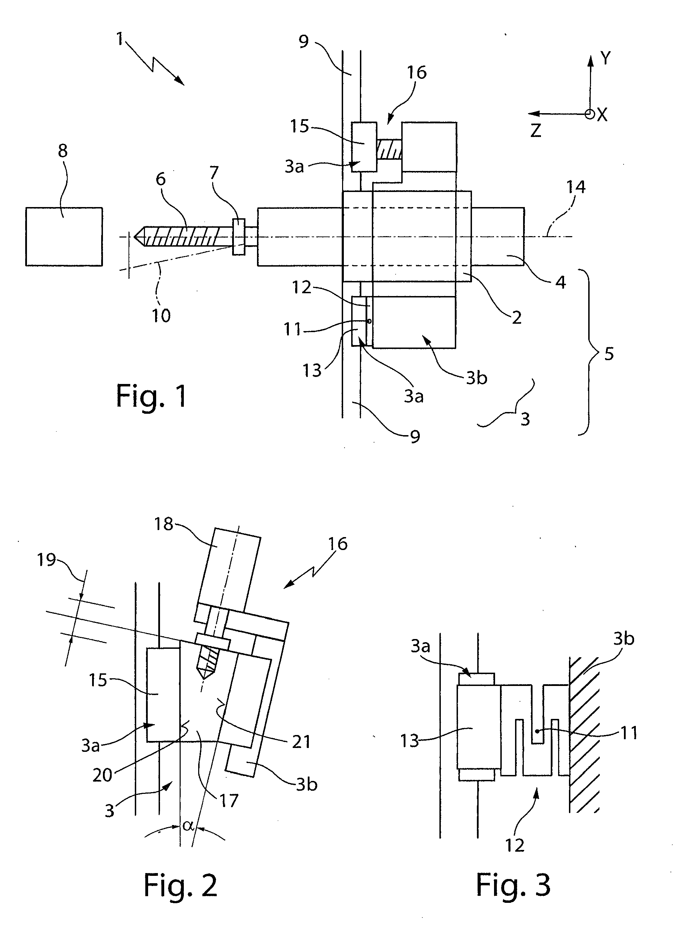

In **Fig. 1** ist eine horizontale Werkzeugmaschine **1** mit einer einen X-, Y- und Z-Schlitten **2**,**3**,**4** umfassenden Schlitteneinheit **5** dargestellt, wobei der Z-Schlitten 4 der Schlitteneinheit 5 eine horizontale Arbeitsspindel **7** aufweist, in der ein Bearbeitungswerkzeug **6** aufgenommen ist. Um ein in der Fig. 1 links dargestelltes und typischerweise in ein ortsfestes Spannfutter eingespanntes Werkstück **8** zu bearbeiten, wird das als Bohrer ausgebildete Bearbeitungswerkzeug 6 zunächst in die Arbeitsspindel 7 des Z-Schlittens 4 bzw. in ein Spannfutter der Arbeitsspindel 7 eingespannt und anschließend rotierend in das Werkstück 8 getrieben. Der Z-Schlitten 4 ist am X-Schlitten 2 in einer ersten horizontalen Richtung **Z**, der X-Schlitten 2 am Y-Schlitten 3 in einer zweiten horizontalen Richtung **X** und der Y-Schlitten 3 an einer ortsfesten vertikalen Y-Führung **9** in einer vertikalen Richtung **Y** verfahrbar geführt. Die Y-Führung 9 ist in der Regel Teil eines Werkzeugmaschinenrahmens, mit dem das Spannfutter für das Werkstück 8 starr verbunden ist. Durch die Verfahrbarkeit der Schlitten 2,3,4 zueinander können auch dann, wenn das Werkstück 8 ortsfest eingespannt ist, bei der Bearbeitung des Werkstücks 8 unterschiedliche Bearbeitungspositionen am Werkstück 8 angefahren und das Werkstück 8 spanend bearbeitet werden. Das relative Verfahren der einzelnen Schlitten 2,3,4 zueinander kann beispielsweise durch Linearmotoren erfolgen.

Aufgrund der auf das Werkzeug 6, die Arbeitsspindel 7 sowie den Z-Schlitten 4 insgesamt einwirkenden Gewichtskraft kann sich ein von der in Fig. 1 dargestellten horizontalen Ausrichtung des Werkzeugs 6 abweichender Durchhang einstellen, wie schematisch durch die gestrichelte Biegelinie **10** dargestellt ist. Dieser Durchhang bewirkt, dass insbesondere die Spitze des Werkzeugs 6 zu tief an dem Werkstück 8 ansetzt und somit abweichend von seiner eigentlichen Sollposition das Werkstück 8 bearbeitet. Wird beispielsweise das als Bohrer ausgebildete Werkzeug 6 durch die Arbeitsspindel 7 mit hohen Drehzahlen beaufschlagt, sodass die Fliehkräfte das gravitationsbedingt gekrümmte Werkzeug 6 in seiner gekrümmten Form rotieren lassen, so kann dies zu einer unerwünschten Vergrößerung des Durchmessers der in dem Werkstück 8 erzeugten Bohrung im Vergleich zum tatsächlichen Bohrerdurchmesser führen. Um diesen für die Genauigkeit der Werkstückbearbeitung nachteiligen Durchhang zu kompensieren oder einen Werkzeugsturz gezielt einzustellen, weist der Y-Schlitten 3 ein in der Y-Führung 9 in Y-Richtung geführtes Laufteil **3a** und ein daran um eine in X-Richtung verlaufende Schwenkachse **11** schwenkbar gelagertes Schwenkteil **3b** auf, an dem der X-Schlitten 2 geführt ist. Um den Durchhang des Werkzeugs 6 zu kompensieren, wird das Schwenkteil 3b - und damit auch der X-Schlitten 2 und der Z-Schlitten - in der Gegenrichtung entsprechend verschwenkt bzw. verkippt. In Fig. 1 ist das Werkzeug 6 in der kompensierten Lage dargestellt, d.h., der gestrichelt dargestellte Durchhang wurde durch das Verschwenken der gesamten Schlitteneinheit 5 (mit Ausnahme des Laufteils 3a) kompensiert. Statt dem gezeigten separaten Schwenklager kann die Schwenkbarkeit des Schwenkteils 3b auch allein durch die eigene Biegeelastizität des am Laufteil 3a befestigten Schwenkteils 3b gegeben sein.

Das Schwenkteil 3b ist mit dem Laufteil 3a über ein Schwenklager **12** verbunden, das, wie in Fig. 1 beispielhaft gezeigt ist, an einem unteren Führungslager **13** des Laufteils 3a zur Führung des Laufteils 3a in der Y-Führung 9 angeordnet sein kann. Anders als in Fig. 1 dargestellt kann das Schwenklager 12 mit seiner Schwenkachse 11 so am Laufteil 3a angeordnet sein, dass sich die Schwenkachse 11 und die Rotationsachse **14** der Arbeitsspindel 7 schneiden. Die für das Kompensieren des Durchhangs oder das Einstellen des Sturzes erforderliche Schwenkbewegung des Schwenkteils 3b wird durch eine an einem oberen Führungslager **15** des Laufteils 3a angeordnete Stelleinheit **16** bewirkt, die von einer Steuereinheit (nicht gezeigt) in Abhängigkeit des vorhandenen Durchhangs angesteuert wird. Der Durchhang kann über Sensoren (nicht gezeigt) gemessen werden.

Wie in **Fig. 2** gezeigt, umfasst die Stelleinheit 16 als Stellglied ein zwischen das Laufteil 3a und das Schwenkteil 3b schiebbares keilförmiges Spreizelement **17** und einen ansteuerbaren Elektromotor **18** zum Verschieben des keilförmigen Spreizelements 17 in Richtung des Doppelpfeils **19**, wodurch der Abstand bzw. der Winkel α zwischen einer Anlagefläche **20** des Laufteils 3a und einer Anlagefläche **21** des Schwenkteils 3b vergrößert oder verringert werden kann. Statt motorisch kann das keilförmige Stellglied alternativ auch auf andere Weise, z.B. hydraulisch, pneumatisch piezoelektrisch etc., verschoben werden.

Wie in **Fig. 3** gezeigt, kann das Schwenklager 12 als Federelement mit einer elastisch verformbaren Labyrinthstruktur ausgebildet sein. Das Schwenkteil 3b kann um die durch das Schwenklager 12 verlaufende Schwenkachse 11 gegenüber dem unteren Führungslager 13 bzw. dem Laufteil 3a verschwenkt werden. Das Laufteil 3a und das Schwenkteil können mit der Labyrinthstruktur einstückig ausgebildet und dadurch elastisch gegeneinander ausgelenkt werden.

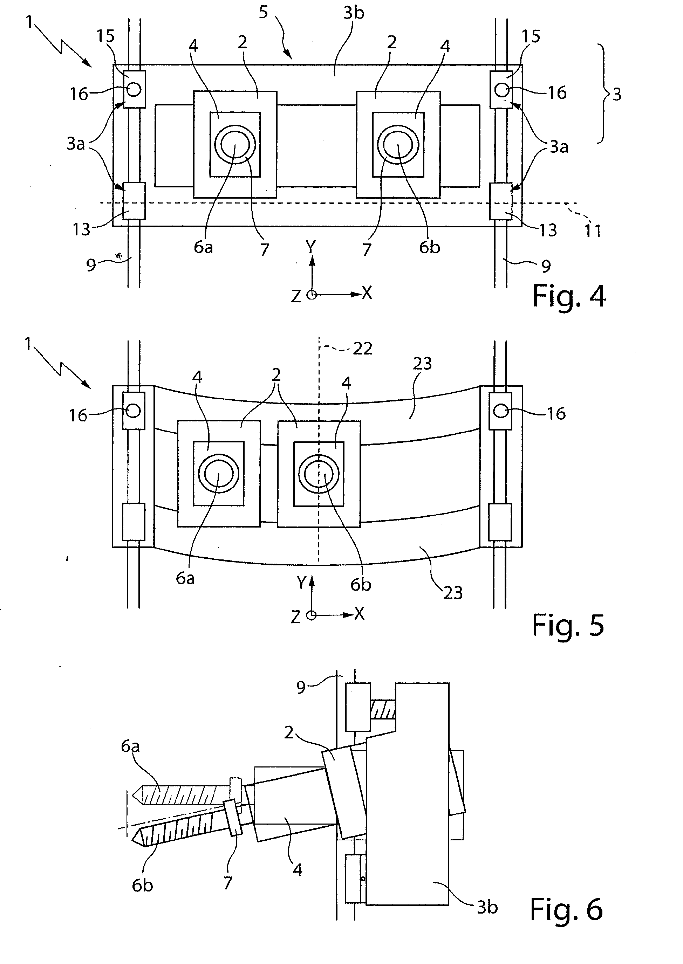

**Fig. 4** zeigt eine mehrspindlige Werkzeugmaschine 1 mit einer Schlitteneinheit 5, die zwei Z-Schlitten 4 mit jeweils einer horizontalen Arbeitsspindel 7 und jeweils mit den Arbeitsspindeln 7 gekoppelten Werkzeugen **6a**, **6b** aufweist. Die beiden Z-Schlitten 4 sind in der Z-Richtung jeweils an einem X-Schlitten 2 verfahrbar geführt. Beide X-Schlitten 2 sind in der X-Richtung an einem gemeinsamen Y-Schlitten 3 verfahrbar geführt, der wiederum in der Y-Richtung in zwei ortsfesten seitlichen Y-Führungen 9 - z.B. mittels eines Gantry-Antriebs - verfahrbar geführt ist. Der Y-Schlitten 3 umfasst beidseitig jeweils ein Laufteil 3a, das mit einem unteren und einem oberen Führungslager 13, 15 in der Y-Führung 9 in Y-Richtung geführt ist, sowie ein rahmenförmiges Schwenkteil 3b, das an den beiden Laufteil 3a um die in X-Richtung verlaufende Schwenkachse 11 schwenkbar gelagert ist. Zwischen den beiden Laufteilen 3a und dem rahmenförmiges Schwenkteil 3b sind jeweils von der Steuereinheit (nicht gezeigt) separat ansteuerbare Stelleinheiten 16 angeordnet, um das Schwenkteil 3b gegenüber den beiden Laufteilen 3a in Abhängigkeit des vorhandenen Durchhangs symmetrisch (winkelsynchron) oder asymmetrisch (winkelasynchron) zu verschwenken.

Sind wie in Fig. 4 die beiden X-Schlitten 2 spiegelsymmetrisch zur Mittenebene **22** des rahmenförmigen Schwenkteil 3b positioniert, ist der Durchhang der beiden Werkzeuge 6 gleich und kann dadurch kompensiert werden, dass das rahmenförmige Schwenkteil 3b gegenüber den beiden Laufteilen 3a, also beidseitig, um den gleichen Winkel in der Gegenrichtung winkelsynchron verschwenkt bzw. verkippt wird.

Sind wie in **Fig. 5** die beiden X-Schlitten 2 nicht spiegelsymmetrisch zur Mittenebene 22 des rahmenförmigen Schwenkteils 3b positioniert, kann sich ein unterschiedlicher Durchhang der beiden Werkzeuge 6 einstellen. Das kann beispielsweise daran liegen, dass auch die horizontalen Querholme **23** des rahmenförmigen Schwenkteils 3b, an denen die X-Schlitten 2 in X-Richtung geführt sind, aufgrund von Biegetorsion einem Durchhang unterworfen sind, der mit dem zunehmendem Abstand der X-Schlitten 2 von den seitlichen Y-Führungen 9 zunimmt. Das in Fig. 5 rechte Werk-zeug 6b weist folglich einen größeren Durchhang als das linke Werkzeug 6a auf, wie auch in **Fig. 6** gezeigt ist. Der individuelle Durchhang der einzelnen Werkzeuge 6a, 6b kann jedoch dadurch reduziert bzw. kompensiert werden, dass die beiden Stelleinheiten 16 unabhängig voneinander angesteuert werden, um das rahmenförmige Schwenkteil 3b gegenüber den beiden Laufteilen 3a in der Gegenrichtung um unterschiedliche Winkel, also winkelasynchron, zu verschwenken bzw. verkippen.

Durch die individuelle Ansteuerbarkeit der beidseitigen Stelleinheiten 16 können die beiden Seiten des Schwenkteils also jeweils individuell verschwenkt werden, um einen Werkzeugdurchhang zu kompensieren oder einen vorbestimmten Werkzeugsturz nicht nur in vertikaler Richtung, sondern auch in horizontale Richtung einzustellen.

## Patentansprüche

1. Werkzeugmaschine (1) mit einer einen X-, Y- und Z-Schlitten (2,3,4) umfassenden Schlitteneinheit (5), deren Z-Schlitten (4) eine ein Bearbeitungswerkzeug (6) aufnehmende horizontale Arbeitsspindel (7) aufweist, wobei der Z-Schlitten (4) am X-Schlitten (2) in einer ersten horizontalen Richtung (Z), der X-Schlitten (2) am Y-Schlitten (3) in einer zweiten horizontalen Richtung (X) und der Y-Schlitten (3) an einer ortsfesten vertikalen Y-Führung (9) in einer vertikalen Richtung (Y) verfahrbar geführt ist,
**dadurch gekennzeichnet,**
**dass** der Y-Schlitten (3) mindestens ein Laufteil (3a), welches in der Y-Führung (9) verfahrbar geführt ist, und mindestens ein Schwenkteil (3b), welches am Laufteil (3a) um eine in X-Richtung verlaufende Schwenkachse (11) schwenkbar gelagert ist, umfasst und dass eine Stelleinheit (16) zum Verschwenken des Schwenkteils (3b) gegenüber dem Laufteil (3a) vorgesehen ist, um einen gravitationsbedingten Werkzeugdurchhang zu kompensieren oder einen vorbestimmten Werkzeugsturz einzustellen.

2. Werkzeugmaschine nach Anspruch 1, **dadurch gekennzeichnet, dass** das Schwenkteil (3b) über ein Schwenklager (12) mit dem Laufteil (3a) gekoppelt ist.

3. Werkzeugmaschine nach Anspruch 2, **dadurch gekennzeichnet, dass** das Schwenklager (12) als elastisch verformbares Federelement ausgebildet ist.

4. Werkzeugmaschine nach Anspruch 1, **dadurch gekennzeichnet, dass** die Schwenkbarkeit des Schwenkteils (3b) durch die eigene Biegeelastizität des Schwenkteils (3b) gegeben ist.

5. Werkzeugmaschine nach einem der vorhergehenden Ansprüche, **dadurch gekennzeichnet, dass** die Stelleinheit (16) als Stellglied (17) ein zwischen das Laufteil (3a) und das Schwenkteil (3b) schiebbares Spreizelement aufweist.

6. Werkzeugmaschine nach einem der vorhergehenden Ansprüche, **dadurch gekennzeichnet, dass** das Stellglied (17) der Stelleinheit (16) elektrisch, insbesondere piezoelektrisch, hydraulisch oder pneumatisch angetrieben ist.

7. Werkzeugmaschine nach einem der vorhergehenden Ansprüche, **dadurch gekennzeichnet, dass** sich eine Rotationsachse (14) der Arbeitsspindel (7) und die Schwenkachse (11) des Schwenkteils (3b) schneiden.

8. Werkzeugmaschine nach einem der vorhergehenden Ansprüche, **dadurch gekennzeichnet, dass** der Y-Schlitten (3) beidseitig jeweils ein Laufteil (3a), welches in einer Y-Führung (9) in Y-Richtung geführt ist, und ein Schwenkteil (3b), welches an den beiden Laufteilen (3a) um die in X-Richtung verlaufende Schwenkachse (11) schwenkbar gelagert ist, umfasst und dass zwischen jedem der beiden Laufteilen (3a) und dem Schwenkteil (3b) jeweils eine separat ansteuerbare Stelleinheit (16) angeordnet ist, um einen gravitationsbedingten Werkzeugdurchhang zu kompensieren oder einen vorbestimmten Werkzeugsturz einzustellen.

9. Werkzeugmaschine nach einem der vorhergehenden Ansprüche, **dadurch gekennzeichnet, dass** im Y-Schlitten (3) mindestens zwei X-Schlitten (2) in der X-Richtung verfahrbar geführt sind, in denen jeweils ein eine horizontale Arbeitsspindel (7) aufweisender Z-Schlitten (4) in Z-Richtung verfahrbar geführt ist.

## Claims

1. Machine tool (1) comprising a carriage unit (5) having an X, a Y and a Z carriage (2, 3, 4), the Z carriage (4) of which comprises a horizontal work spindle (7) which accommodates a processing tool (6), wherein the Z carriage (4) is guided on the X carriage (2) such that it can be moved in a first horizontal direction (Z), the X carriage (2) is guided on the Y carriage (3) such that it can be moved in a second horizontal direction (X) and the Y carriage (3) is guided on a stationary vertical Y guide (9) such that it can be moved in a vertical direction (Y),
**characterized in that**
the Y carriage (3) comprises at least one runner part (3a) which is movably guided in the Y guide (9), and at least one pivot part (3b) which is mounted to the runner part (3a) such that it can be pivoted about a pivot axis (11) extending in the X direction, and that an actuating unit (16) is provided for pivoting the pivot part (3b) with respect to the runner part (3a) in order to compensate for a tool sag caused by gravity or adjust a predetermined tool drop.

2. Machine tool according to claim 1, **characterized in that** the pivot part (3b) is coupled to the runner part (3a) via a pivot bearing (12).

3. Machine tool according to claim 2, **characterized in that** the pivot bearing (12) is designed as an elastically deformable spring element.

4. Machine tool according to claim 1, **characterized in that** the pivotability of the pivot part (3b) is provided by the natural bending elasticity of the pivot part (3b).

5. Machine tool according to any one of the preceding claims, **characterized in that** the actuating unit (16) comprises a spreading element as actuator (17) which can be moved between the runner part (3a) and the pivot part (3b).

6. Machine tool according to any one of the preceding claims, **characterized in that** the actuator (17) of the actuating unit (16) is driven electrically, in particular piezoelectrically, hydraulically or pneumatically.

7. Machine tool according to any one of the preceding claims, **characterized in that** an axis of rotation (14) of the work spindle (7) and the pivot axis (11) of the pivot part (3b) intersect.

8. Machine tool according to any one of the preceding claims, **characterized in that** on each of its two sides, the Y carriage (3) comprises one runner part (3a) which is guided in a Y guide (9) in the Y direction, and one pivot part (3b) which is mounted to the two runner parts (3a) such that it can be pivoted about the pivot axis (11) extending in the X direction, and that a separately driven actuating unit (16) is disposed between each of the runner parts (3a) and the pivot part (3b) in each case in order to compensate for a tool sag caused by gravity or adjust a predetermined tool drop.

9. Machine tool according to any one of the preceding claims, **characterized in that** at least two X carriages (2) are guided in the Y carriage (3) such that they can be moved in the X direction, wherein a Z carriage (4) having a horizontal work spindle (7) is guided in each of the X carriages such that it can be moved in the Z direction.

## Revendications

1. Machine-outil (1) équipée d'une unité (5) comprenant des chariots (2, 3, 4) des X, des Y et des Z, dont le chariot (4) des Z présente une broche horizontale de travail (7) recevant un outil d'usinage (6), ledit chariot (4) des Z étant guidé sur le chariot (2) des X avec mobilité dans une première direction horizontale (Z), ledit chariot (2) des X étant guidé sur le chariot (3) des Y avec mobilité dans une seconde direction horizontale (X), et ledit chariot (3) des Y étant guidé, avec mobilité dans une direction verticale (Y), sur un guide (9) des Y stationnaire et vertical,
**caractérisée par le fait**
**que** le chariot (3) des Y inclut au moins une partie de roulement (3a), guidée avec mobilité dans le guide (9) des Y, et au moins une partie de pivotement (3b) montée pivotante, sur ladite partie de roulement (3a), autour d'un axe de pivotement (11) s'étendant dans la direction des X ; et par la présence d'une unité de réglage (16) conçue pour faire pivoter ladite partie de pivotement (3b) par rapport à ladite partie de roulement (3a), en vue de compenser un fléchissement gravitationnel de l'outil, ou de régler un affaissement prédéterminé dudit outil.

2. Machine-outil selon la revendication 1, **caractérisée par le fait que** la partie de pivotement (3b) est couplée à la partie de roulement (3a) par l'intermédiaire d'un palier de pivotement (12).

3. Machine-outil selon la revendication 2, **caractérisée par le fait que** le palier de pivotement (12) est un élément doué d'élasticité, déformable élastiquement.

4. Machine-outil selon la revendication 1, **caractérisée par le fait que** l'aptitude pivotante de la partie de pivotement (3b) est procurée par l'élasticité en flexion propre à ladite partie de pivotement (3b).

5. Machine-outil selon l'une des revendications précédentes, **caractérisée par le fait que** l'unité de réglage (16) comporte, en tant qu'organe de manoeuvre (17), un élément d'écartement apte à coulisser entre la partie de roulement (3a) et la partie de pivotement (3b).

6. Machine-outil selon l'une des revendications précédentes, **caractérisée par le fait que** l'organe de manoeuvre (17) de l'unité de réglage (16) est entraîné électriquement, notamment en mode piézoélectrique, hydrauliquement ou pneumatiquement.

7. Machine-outil selon l'une des revendications précédentes, **caractérisée par le fait qu'**un axe de rotation (14) de la broche de travail (7), et l'axe de pivotement (11) de la partie de pivotement (3b), se coupent mutuellement.

8. Machine-outil selon l'une des revendications précédentes, **caractérisée par le fait que** le chariot (3) des Y est respectivement pourvu d'une partie de roulement (3a) guidée de part et d'autre dans la direction des Y, dans un guide (9) des Y, et d'une partie de pivotement (3b) montée pivotante, sur les deux parties de roulement (3a), autour de l'axe de pivotement (11) s'étendant dans la direction des X ; et **par le fait qu'**une unité de réglage (16), pouvant être activée de manière distincte, est respectivement interposée entre les deux parties de roulement (3a) et la partie de pivotement (3b), en vue de compenser un fléchissement gravitationnel de l'outil, ou de régler un affaissement prédéterminé dudit outil.

9. Machine-outil selon l'une des revendications précédentes, **caractérisée par** un guidage avec mobilité dans la direction des X, dans le chariot (3) des Y, d'au moins deux chariots (2) des X dans lesquels est guidé, avec mobilité dans la direction des Z, un chariot respectif (4) des Z qui est doté d'une broche horizontale de travail (7).
